# EUROPÄISCHE PATENTSCHRIFT

(11) **EP 3 382 254 B1**
(45) Veröffentlichungstag und Bekanntmachung des Hinweises auf die Patenterteilung: **03.06.2020**
(21) Anmeldenummer: 17163623.6
(22) Anmeldetag: 29.03.2017
(51) Int. Cl.: F16L 53/00

(54) **BEHEIZTE ROHRLEITUNG MIT STECKER SOWIE EIN VERFAHREN ZUM BETRIEB DIESER ROHRLEITUNG**
HEATED PIPELINE WITH PLUG, AND A METHOD FOR OPERATING THIS PIPELINE
CONDUITE CHAUFFÉE COMPRENANT UNE PRISE ET SON PROCÉDÉ DE FONCTIONNEMENT

(43) Veröffentlichungstag der Anmeldung: 03.10.2018
(73) Patentinhaber: TI Automotive (Fuldabrück) GmbH, 34277 Fuldabrück (DE)
(72) Erfinder: Suffner, Ingo, 34277 Fuldabrück (DE); Barthel, Iris, 34270 Schauenburg (DE); Fischbach, Gerd, Borken (DE); Choo, Albert, Gyeyang-gu Incheon 407-053 (KR); Rohde, Reiner, 34323 Malsfeld (DE); Bude, Kay, 36277 Schenklengsfeld (DE); Weissing, Michael, 69120 Heidelberg (DE)
(74) Vertreter: Kasseck, Christoph

(56) Entgegenhaltungen:
- EP-A2- 2 420 715
- EP-B1- 2 171 337
- WO-A1-2008/131993
- DE-A1-102012 020 055
- DE-U1-202008 013 048

## Beschreibung

Die Erfindung betrifft eine Rohrleitung für ein fluides Medium von Kraftfahrzeugen, insbesondere für eine wässrige Harnstofflösung, umfassend ein Rohr, wenigstens einen Heizdraht und einen an einem Rohrende des Rohres angeordneten Stecker, wobei der Stecker einen Steckerschaft und einen das Rohrende und den Heizdraht umschließendes Gehäuse aufweist, wobei der Steckerschaft ein Rastmittel, vorzugsweise einen Ringbund, zum Verrasten in einem Verbinder umfasst.

Eine derartige Rohrleitung ist beispielsweise aus EP 2 171 337 B1 bekannt. Das darin gezeigte Rohr weist ein Innenrohr sowie ein Anlageelement in Form eines Klebebandes auf, wobei das Anlageelement zwei doppelhelixförmig zueinander angeordnete Heizdrähte auf dem Innenrohr zur Anlage bringt. Die Anordnung aus Innenrohr, Heizdrähten und Anlageelement wird zudem noch von einem Schutzrohr in Form eines Wellrohres umschlossen. Das Gehäuse des Steckers umschließt das Anlageelement teilweise, wobei sich innerhalb des Gehäuses die Heizdrähte von dem Innenrohr lösen. Dort werden die Heizdrähte über elektrische Verbindungen mit einem weiteren Heizdraht des Steckerschaftes verbunden. Der Heizdraht des Steckerschaftes wird durch wendelförmige Nuten oder durch eine flächig ausgebildete Nut auf dem Steckerschaft wendelförmig geführt. Sowohl die wendelförmige Nut als auch die flächige Nut sind Ausrichtungselemente, welche der Führung des Heizdrahtes dienen. Zum Schutz des Heizdrahtes auf dem Steckerschaft erstreckt sich das Gehäuse vom Rohrende über die Ausrichtungselemente hinaus bis in die Spitze des Steckerschaftes. Beim Einstecken des Steckerschaftes in einen komplementären Verbinder entsteht auch ein axialer Überlapp zwischen dem Gehäuse des Steckerschaftes und dem Verbinder. Um eine Rastverbindung zwischen dem Verbinder und dem Stecker herzustellen, weist das Gehäuse des Steckerschaftes zudem Rastmittel auf, welche mit komplementären Rastmittel im Verbinder wechselwirken und so die Rastverbindung erzeugen.

Als nachteilig wird angesehen, dass der Heizdraht auf dem Steckerschaft angeordnet ist, was eine aufwendige Herstellung bedeutet. Außerdem besteht die Gefahr der Undichtigkeit, wenn das Gehäuse des Steckerschaftes beschädigt ist, weil dann die Rastmittel des Steckerschaftes aus den komplementären Rastmitteln des Verbinders herausrutschen können. Der Erfindung liegt daher die technische Aufgabe zugrunde, eine Rohrleitung mit Steckerschaft anzugeben, bei der der Herstellungsaufwand verringert ist und/oder wobei die Rastverbindung zwischen Stecker und Verbinder sicherer ausgebildet ist.

Zur Lösung dieser Aufgabe lehrt die Erfindung eine Rohrleitung für ein fluides Medium von Kraftfahrzeugen, insbesondere für eine wässrige Harnstofflösung, umfassend ein Rohr, wenigstens einen Heizdraht und einen an einem Rohrende des Rohres angeordneten Stecker, wobei der Stecker einen Steckerschaft und ein das Rohrende und den Heizdraht umschließendes Gehäuse aufweist, wobei der Steckerschaft ein Rastmittel, vorzugsweise einen Ringbund, zum Verrasten in einem Verbinder umfasst,

wobei das Rohr ein Innenrohr und ein Anlageelement aufweist, wobei der Heizdraht zwischen dem Innenrohr und dem Anlageelement angeordnet ist, wobei das Anlageelement den Heizdraht auf dem Innenrohr zur Anlage bringt, wobei das Gehäuse das Anlageelement teilweise umschließt, wobei ein erster Abschnitt des Heizdrahtes am Rohrende zwischen dem Anlageelement und dem Innenrohr verläuft und wobei ein zweiter Abschnitt des Heizdrahtes zwischen dem Anlageelement und dem Gehäuse verläuft.

Der Erfindung liegt die Erkenntnis zugrunde, dass durch den zusätzlichen Verlauf des Heizdrahtes zwischen Anlageelement und Gehäuse eine ausreichende Länge des Heizdrahtes im Gehäuse untergebracht werden kann, so dass der gesamte Stecker hinreichend erwärmt wird. Eine maschinell wie manuell aufwändige Wendelung ist am Steckerschaft dann nicht mehr erforderlich. Darüber hinaus bedarf es dann auch keiner weitreichenden Umschließung des Steckerschaftes durch das Gehäuse, so dass der Steckerschaft selbst das Rastmittel aufweisen kann. Da der Steckerschaft wesentlich kompakter als das Gehäuse ist und integral (aus einem Guss) ausgebildet sein kann, ist er deutlich stabiler und in der Folge ist auch eine entsprechend hergestellte Rastverbindung deutlich sicherer.

Der Begriff "Innenrohr" meint insbesondere ein separates und vorzugsweise ein separat extrudiertes Rohrteil. Das Innenrohr kann aber auch ein innerer Wandabschnitt des separaten Rohrteiles sein. Der Ausdruck "Anlageelement" meint insbesondere ein Klebeband und/oder einen Schrumpfschlauch und/oder einen äußeren Wandabschnitt des separaten Rohrteils.

Der Begriff "Rohrende" meint insbesondere den vom Gehäuse umschlossenen Abschnitt des Rohres einschließlich des dem Steckerschaft zugeordneten Stirnendes des Rohres. Der Ausdruck "Abschnitt" meint insbesondere einen Abschnitt axialer Ausrichtung. Der Begriff "axial" meint insbesondere die Achse des Steckerschaftes bzw. Rohres.

Vorzugsweise ist der Steckerschaft ausgebildet, um in einen Verbinder fluiddicht eingesteckt zu werden. Zweckmäßigerweise ist die Außenseite des Steckerschaftes für Fluiddichtigkeit ausreichend glatt, um mit einem oder mehreren Dichtungsringen des Verbinders wechselwirken zu können. Es ist auch möglich, dass der Steckerschaft einen Dichtungsring bzw. Dichtungsringe aufweist, um mit einem auf seiner Innenseite entsprechend glatt ausgebildeten Verbinder fluiddicht wechselwirken zu können.

Zweckmäßigerweise läuft der wenigstens eine Heizdraht entlang des Rohres auf den Stecker hinzu. Gemäß einer sehr bevorzugten Ausführungsform weist das Rohr zwei Heizdrähte auf, welche von dem Anlageelement umschlossen sind. Es ist vorteilhaft, die beiden Heizdrähte doppelhelixförmig am Innenrohr anzuordnen. Das Gehäuse hat zweckmäßigerweise eine dem Rohrende zugewandte Innenseite und eine Außenseite. Es ist bevorzugt, dass das Gehäuse wenigstens eine elektrische Verbindung umschließt.

Vorteilhafterweise umfasst der Steckerschaft einen Dichtungsabschnitt und einen Rastabschnitt auf, wobei der Rastabschnitt dem Rohrende zugeordnet ist und wobei der Dichtungsabschnitt eine Dichtungsanordnung aufweist oder eine Dichtungsanordnung des Verbinders zugeordnet ist. Vorzugsweise sind der Dichtungsabschnitt und der Rastabschnitt durch das bzw. die Rastmittel des Steckerschaftes bzw. durch den Ringbund voneinander getrennt. Zweckmäßigerweise liegt der Rastabschnitt in axialer Richtung zwischen dem Dichtungsabschnitt und dem Anlageelement bzw. einem Schutzrohr. Bevorzugt weist der Steckerschaft ein dem Rohrende zugeordnetes Stirnende und ein dem Rohrende abgewandtes Stirnende auf. Der Begriff "Stirnende" meint insbesondere die ringförmigen Flächen in der Querschnittsebene an den beiden abschließenden Enden des Steckerschaftes. Der Steckerschaft weist zweckmäßigerweise eine Außenseite und eine Innenseite auf, wobei die Innenseite bevorzugt einen Kanal bildet, welcher Kanal die Stirnenden des Steckerschaftes zwecks Durchleitung des fluiden Mediums durch den Steckerschaft miteinander verbindet.

Es ist sehr vorteilhaft, wenn der zweite Abschnitt des Heizdrahtes eine Länge aufweist, welche wenigstens um den Faktor 1,5, vorzugsweise wenigstens um den Faktor 2 und besonders vorzugsweise wenigstens um den Faktor 3 größer ist als die Ausdehnung des zweiten Abschnittes des Heizdrahtes in axialer Richtung. Der Ausdruck "axiale Richtung" meint insbesondere die Richtung der Rohrachse. Zweckmäßigerweise ist die Länge des zweiten Abschnittes des Heizdrahtes so bemessen, dass sie höchstens um den Faktor 20 bevorzugt höchstens um den Faktor 15 größer ist als die Ausdehnung des zweiten Abschnittes des Heizdrahtes in axialer Richtung. Gemäß einer bevorzugten Ausführungsform weist die Rohrleitung einen zweiten Heizdraht auf, wobei ein erster Abschnitt des zweiten Heizdrahtes am Rohrende zwischen dem Anlageelement und dem Innenrohr verläuft und wobei ein zweiter Abschnitt des zweiten Heizdrahtes zwischen dem Anlageelement und dem Gehäuse verläuft. Es ist zweckmäßig, wenn der zweite Abschnitt des zweiten Heizdrahtes bemessen ist wie der zweite Abschnitt des Heizdrahtes bzw. ersten Heizdrahtes. Es ist möglich, dass der zweite Abschnitt des Heizdrahtes bzw. ersten Heizdrahtes bzw. zweiten Heizdrahtes wenigstens einen schraubenlinienförmigen bzw. schleifenförmigen bzw. mäanderförmigen Teilabschnitt aufweist. Es ist bevorzugt, dass der Teilabschnitt bzw. die Teilabschnitte wenigstens eine, vorzugsweise aber mehrere Wicklungen umfasst bzw. umfassen. Die Wicklungen des Teilabschnittes bzw. der Teilabschnitte können zueinander koaxial ausgerichtet sein oder zueinander versetzt sein. Der Teilabschnitt bzw. die Teilabschnitte ist/sind zweckmäßigerweise von dem Gehäuse umschlossen und ist/sind bevorzugt zwischen dem Anlageelement und dem Gehäuse angeordnet.

Gemäß einer besonders bevorzugten Ausführungsform ist der Steckerschaft und vorzugsweise der Stecker frei von in oder an dem Steckerschaft bzw. dem Stecker angeordneten Ausrichtungselementen zur Ausrichtung des Heizdrahtes. Der Begriff "Ausrichtungselement" meint insbesondere solche Elemente, welche nur der Ausrichtung des Heizdrahtes dienen, z. B. Nuten oder Stifte oder Vorsprünge auf der Außenseite des Steckerschaftes bzw. auf der Innenseite des Gehäuses. Der Begriff "Ausrichtungselemente" meint insbesondere keine solchen Elemente, welche den Heizdraht lediglich an den Steckerschaft bzw. das Rohrende bzw. an das Innenrohr bzw. an das Gehäuse andrücken, wie beispielsweise Klebebänder oder Schrumpfschläuche. Demzufolge sind die zylindrischen Wände des Rohrendes bzw. des Innenrohres bzw. des Anlageelementes keine Ausrichtungselemente im Sinne der Erfindung. Zwar können diese Wände den Heizdraht berühren und damit verformen und ausrichten, doch dienen diese zylindrischen Wände primär der Abdichtung und nicht ausschließlich der Ausrichtung des Heizdrahtes. Koaxiale zylindrische Wände sind daher bevorzugt keine Ausrichtungselemente im Sinne der Erfindung. Der Begriff "Ausrichtungselement" meint insbesondere solche Elemente, deren Wände auf der Außenseite des Steckerschaftes bzw. Rohrendes bzw. Gehäuses radial abstehen. Insbesondere sind Elemente, welche neben dem Heizdraht auch elektrische Verbindungen ausrichten keine Ausrichtungselemente zur Ausrichtung des Heizdrahtes.

Es ist sehr bevorzugt, dass ein Wärmeleitelement im Inneren des Rohrendes angeordnet ist, welches Wärmeleitelement sich bis in den Steckerschaft und vorzugsweise bis in einen bzw. den Dichtungsabschnitt des Steckerschaftes hinein erstreckt. Die Rohrleitung ist vorzugsweise so ausgebildet, dass die Wärme des Heizdrahtes bzw. der Heizdrähte sich auf das Wärmeleitelement überträgt, so dass der Steckerschaft bzw. ein Kanal des Steckerschaftes über das Wärmeleitelement erwärmt wird. Das Wärmeleitelement ist vorzugsweise im Inneren des Innenrohrs angeordnet. Zweckmäßigerweise umschließt eine Innenseite des Innenrohrs das Wärmeleitelement entlang eines ersten axialen Abschnitts. Vorzugsweise umschließt der Steckerschaft und bevorzugt die Innenseite des Steckerschaftes das Wärmeleitelement entlang eines zweiten axialen Abschnittes. Es ist bevorzugt, dass die Innenseite des Innenrohrs in Kontakt steht mit dem Wärmeleitelement, wobei der Kontakt vorzugsweise ein Druckkontakt in vorzugsweise radialer Richtung ist. Zweckmäßigerweise ist das Wärmeleitelement so im Inneren des Rohrendes angeordnet, dass das Wärmeleitelement mit dem Fluid in Berührung bringbar ist. Vorteilhafterweise überlappen sich der Heizdraht bzw. die Heizdrähte und das Wärmeleitelement abschnittsweise in axialer Richtung. Es ist bevorzugt, dass der Überlapp zwischen dem Heizdraht bzw. den Heizdrähten und dem Wärmeleitelement berührungsfrei ist. Vorzugsweise ist der Heizdraht bzw. sind die Heizdrähte durch das Innenrohr von dem Wärmeleitelement getrennt. Zweckmäßigerweise umschließt der Heizdraht bzw. umschließen die Heizdrähte das Wärmeleitelement entlang eines axialen Abschnitts. Das Wärmeleitelement umfasst zweckmäßigerweise Metall oder einen wärmeleitfähigen Kunststoff und ist besonders bevorzugt als Schraubenfeder ausgebildet. Es ist bevorzugt, dass das Wärmeleitelement lediglich indirekt über den Heizdraht bzw. die Heizdrähte beheizt wird und insbesondere keine elektrischen Anschlüsse aufweist. In diesem Sinne ist das Wärmeleitelement zweckmäßigerweise ein passives Heizelement. Das Wärmeleitelement ist vorzugsweise zu wenigstens 20 %, weiter vorzugsweise zu wenigstens 25 % und besonders vorzugsweise zu wenigstens 30 % seiner Länge im Innenrohr angeordnet.

Gemäß einer ganz besonders bevorzugten Ausführungsform überlappen sich der Heizdraht bzw. die Heizdrähte und der Steckerschaft nicht in axialer Richtung. Vorteilhafterweise läuft der auf den Stecker hinzulaufende Heizdraht bzw. die auf den Stecker hinzulaufenden Heizdrähte bis zu einem dem Rohrende zugeordneten Stirnende des Steckerschaftes, wobei der Heizdraht bzw. die Heizdrähte an dem dem Rohrende zugeordneten Stirnende des Steckerschaftes seine bzw. ihre Richtung ändert/n, so dass der Heizdraht bzw. die Heizdrähte ab diesem Stirnende des Steckerschaftes wenigstens eine Teilstrecke zurückläuft bzw. zurücklaufen. Vorzugsweise ist der Heizdraht bzw. sind die Heizdrähte lediglich am Rohr bzw. Rohrende befestigt, und ist/sind insbesondere nicht an dem Steckerschaft bzw. am Gehäuse befestigt. Es ist möglich, dass der Heizdraht bzw. die Heizdrähte mittelbar und insbesondere über eine elektrische Verbindung am Rohrende befestigt ist. Es ist sehr bevorzugt, dass eine elektrische Verbindung oder mehrere elektrische Verbindungen an dem Rohrende befestigt sind. Der Begriff "befestigt" meint insbesondere eine reversible Befestigung und insbesondere keinen unmittelbaren Kontakt. Es ist möglich, dass ein Abschnitt eines Halters zwischen dem Rohr und der elektrischen Verbindung bzw. den elektrischen Verbindungen angeordnet ist.

Gemäß einer besonders vorteilhaften Ausführungsform umschließt das Gehäuse höchstens 70 %, vorzugsweise 50 % und besonders vorzugsweise höchstens 30 % der axialen Ausrichtung des Steckerschaftes. Es ist bevorzugt, dass das Gehäuse höchstens 40 %, weiter bevorzugt höchstens 20 % und ganz besonders bevorzugt höchstens 10 % der axialen Ausdehnung des Steckerschaftes umschließt. Gemäß einer ganz besonders bevorzugten Ausführungsform umschließt das Gehäuse lediglich ein Eingriffselement - vorzugsweise einen Flansch - des Steckerschaftes an einem dem Rohrende zugeordneten Stirnende des Steckerschaftes.

Es ist sehr vorteilhaft, wenn das Gehäuse einen Halter zur Halterung des wenigstens einen Heizdrahtes bzw. wenigstens einer elektrischen Verbindung am Rohrende umschließt. Der Halter ist vorzugsweise separat von dem Steckerschaft bzw. dem Gehäuse bzw. dem Rohr ausgebildet. Der Halter ist vorzugsweise auf dem Rohrende aufrastbar und weiter vorzugsweise nach dem Aufrasten klemmend auf dem Rohrende angeordnet. Der Halter weist zweckmäßigerweise eine Nut für eine vorzugsweise rastende und besonders vorzugsweise rastende und klemmende Aufnahme des Rohrs bzw. des Rohrendes bzw. des Innenrohrs bzw. des Innenrohrs mit Anlageelement auf. Zweckmäßigerweise sitzt der Halter auf dem Anlageelement. Das Anlageelement umfasst vorzugsweise ein Klebeband und/oder einen Schrumpfschlauch am Rohrende. Vorzugsweise berührt der Halter den Schrumpfschlauch des Anlageelementes.

Bevorzugterweise umfasst der Halter wenigstens eine Aufnahme und weiter vorzugsweise wenigstens zwei oder drei Aufnahmenuten für die Aufnahme einer elektrischen Verbindung bzw. mehrerer elektrischen Verbindungen. Die Aufnahme bzw. die Aufnahmen des Halters ist/sind zweckmäßigerweise hohlzylindrisch ausgebildet und bevorzugt parallel zur Rohrachse ausgerichtet. Die Öffnungen der Aufnahmen sind vorzugsweise dem Steckerschaft zugewandt. Die Aufnahme bzw. Aufnahmen umfasst/umfassen vorzugsweise jeweils einen in axialer Richtung wirkenden Anschlag, wobei der Anschlag bevorzugt an einem vom Steckerschaft abgewandten Stirnende der jeweiligen Aufnahme angeordnet ist. Die Aufnahme bzw. Aufnahmen sind vorteilhafterweise so ausgebildet, dass sie die elektrische Verbindung bzw. die elektrischen Verbindungen klemmend aufnimmt bzw. aufnehmen.

Der Halter bzw. das Gehäuse sind besonders bevorzugt so ausgebildet, dass sie einander nicht berühren. Zweckmäßigerweise berühren die elektrische Verbindung bzw. die elektrischen Verbindungen und das Gehäuse einander nicht.

Besonders vorzugsweise weist der Heizdraht eine Litze mit einer Kunststoffbeschichtung auf, wobei die Kunststoffbeschichtung vorzugsweise einen Fluorkunststoff umfasst. Der Fluorkunststoff ist vorzugsweise ein thermoplastischer Kunststoff und besonders vorzugsweise Polyvinylidenfluorid (PVDF). Die Kunststoffbeschichtung ist vorzugsweise wenigstens 0,05 mm, weiter vorzugsweise wenigstens 0,1 mm und besonders vorzugsweise wenigstens 0,12 mm stark. Zweckmäßigerweise ist die Kunststoffbeschichtung höchstens 1,0 mm, vorzugsweise 0,6 mm und besonders vorzugsweise höchstens 0,4 mm stark. Es ist sehr bevorzugt, dass die Litze durch die Kunststoffbeschichtung hindurch erkennbar ist. Die Litze umfasst zweckmäßigerweise einen oder mehrere Einzeldrähte und weist vorzugsweise Kupfer bzw. eine Kupfer-NickelLegierung auf. Die Litze ist zweckmäßigerweise wenigstens 0,3 mm, bevorzugt wenigstens 0,4 mm und besonders bevorzugt wenigstens 0,5 mm dick. Die Litze ist vorteilhafterweise höchstens 1,2 mm, weiter vorteilhafterweise höchstens 1,0 mm und besonders vorteilhafterweise höchstens 0,8 mm dick.

Gemäß einer ersten, besonders bevorzugten Ausführungsform umfasst das Rohr ein Schutzrohr, wobei vorzugsweise das Schutzrohr gegenüber dem Innenrohr am Rohrende abgedichtet ist. Zweckmäßigerweise ist das Innenrohr ein separates, und vorzugsweise ein separat extrudiertes Rohrteil, welches Rohrteil von einem bevorzugt separat ausgebildeten Anlageelement umschlossen ist, welches Anlageelement bevorzugt von dem Schutzrohr umschlossen wird. Das Schutzrohr ist beispielsweise ein Wellrohr oder ein durchgängiges, entsprechend dickes rohrförmiges Element. Das Rohr kann aber auch ein einstückiges Bauteil sein, in welchem der Heizdraht bzw. die Heizdrähte eingebettet ist/sind. Der wenigstens eine Heizdraht steht zweckmäßigerweise nicht in Kontakt mit dem Fluidkanal des Rohres, weshalb das Innenrohr dieses einstückigen Bauteiles ein innerer Wandabschnitt des einstückigen Rohres ist, wobei der innere Wandabschnitt von dem Heizdraht bzw. den Heizdrähten umschlossen ist/sind. Ein äußerer Wandabschnitt des einstückigen Bauteiles umschließt den Heizdraht bzw. die Heizdrähte und bringt hierdurch den Heizdraht bzw. die Heizdrähte zur Anlage auf dem Innenrohr. Gemäß dieser Ausführungsform ist der äußere Wandabschnitt somit das Anlageelement.

Vorteilhafterweise überragt das Innenrohr mit dem Heizdraht bzw. den Heizdrähten und vorzugsweise auch das Anlageelement in Form des Klebebandes das Schutzrohr. Bevorzugt wird das Schutzrohr mittels eines Schrumpfschlauches des Anlageelementes gegenüber dem Innenrohr abgedichtet. Vorzugsweise umschließt der Schrumpfschlauch des Anlageelementes einen Endabschnitt des Schutzrohres und einen Abschnitt des Innenrohres mit dem Heizdraht bzw. den Heizdrähten bzw. mit dem Klebeband. Am Rohrende umfasst das Anlageelement vorzugsweise ein bzw. das Klebeband und einen Schrumpfschlauch, wobei bevorzugt der Schrumpfschlauch das Klebeband umschließt. Es ist bevorzugt, dass das Gehäuse die Abdichtung bzw. den Schrumpfschlauch des Anlageelementes bzw. den das Schutzrohr überragenden Abschnitt des Innenrohrs vollständig umschließt.

Es ist bevorzugt, dass das Gehäuse zwischen sich und dem Rohrende einen mit Luft gefüllten Raum einschließt. Ein mit Luft gefüllter Raum liegt insbesondere nicht bei Gehäusen vor, welche um das Rohrende umspritzt werden. Es ist zweckmäßig, dass sich der Heizdraht bzw. die Heizdrähte wenigstens abschnittsweise innerhalb des mit Luft gefüllten Raumes befinden. Vorteilhafterweise erstreckt sich der mit Luft gefüllte Raum von einem dem Steckerschaft zugeordnetem Stirnende des Gehäuses bis zu einem dem Steckerschaft abgewandten Stirnende des Gehäuses. Es ist bevorzugt, dass die elektrische Verbindung bzw. die elektrischen Verbindungen in dem mit Luft gefüllten Raum angeordnet sind. Zweckmäßigerweise ist wenigstens das Rohrende bzw. der Halter bzw. die Abdichtung bzw. der Schrumpfschlauch von dem mit Luft gefüllten Raum umschlossen. Insbesondere wird das Gehäuse nicht von einer Spritzgussfüllung - auch nicht abschnittsweise - ausgefüllt. Der mit Luft gefüllte Raum dient zweckmäßigerweise der Wärmeisolierung. Gemäß einer bevorzugten Ausführungsform umfasst das Gehäuse miteinander verbundene Gehäuseteile. Der Ausdruck "miteinander verbunden" meint insbesondere, dass die Gehäuseteile nicht ursprünglich miteinander verbunden waren, so dass nach der Verbindung das Gehäuse eine Verbindungsstelle bzw. Verbindungsstellen aufweist. Bei diesen Verbindungsstellen handelt es sich beispielsweise um Rastelemente, Schweißnähte oder dergleichen. Vorzugsweise umfasst das Gehäuse wenigstens zwei und besonders vorzugsweise lediglich zwei Gehäuseteile. Die Gehäuseteile sind vorzugsweise Gehäuseschalen und besonders vorzugsweise zwei Gehäusehalbschalen. Das Gehäuse ist zweckmäßigerweise so ausgebildet, dass es zwischen sich und dem Anschlussteil einen mit Luft gefüllten Raum einschließt.

Vorzugsweise ist ein Abschnitt des Rohrendes bzw. des Innenrohrs in den Steckerschaft bzw. in eine Aufnahme des Steckerschaftes hineingesteckt. Die Aufnahme des Steckerschaftes umfasst bevorzugt einen Anschlag für das Rohrende bzw. das Innenrohr. Es ist bevorzugt, dass der Innendurchmesser der Aufnahme so bemessen ist, dass das Innenrohr in der Aufnahme eingeklemmt ist. Ganz besonders vorzugsweise wird das Innenrohr mit der Aufnahme mittels Laserdurchstrahlschweißen verbunden. Es ist zweckmäßig, dass der Steckerschaft und das Innenrohr schwarz gefärbt sind, wobei der Steckerschaft zugleich für Nahinfrarot- bzw. Nahinfrarotstrahlung transluzent ist. Das Innenrohr ist zweckmäßigerweise gegenüber Infrarot- bzw. Nahinfrarotstrahlung opak ausgebildet.

Vorteilhafterweise weist das Gehäuse ein Eingriffselement zum Eingriff mit dem Steckerschaft auf, wobei das Eingriffselement des Gehäuses vorzugsweise an einem Stirnende des Gehäuses und besonders vorzugsweise an einem dem Verbinder zugewandten Stirnende des Gehäuses angeordnet ist. Das Eingriffselement des Gehäuses ist vorzugsweise eine Nut oder ein Flansch, wobei das Eingriffselement des Gehäuses zweckmäßigerweise in Eingriff steht mit einem Eingriffselement des Steckerschaftes. Das Eingriffselement des Steckerschaftes ist bevorzugt ein Flansch oder eine Nut und besonders bevorzugt ein Flansch. Das Eingriffselement des Steckerschaftes ist zweckmäßigerweise im Bereich des Rastabschnitts und vorzugsweise an einem dem Rohrende zugeordneten Stirnende des Steckerschaftes angeordnet. Das Gehäuse umfasst zweckmäßigerweise ein Halteelement zum Eingriff mit einem Schutzrohr, wobei das Halteelement vorzugsweise an einem dem Steckerschaft abgewandten Stirnende des Gehäuses angeordnet ist. Vorzugsweise ist das Halteelement des Gehäuses ein Flansch zum Eingreifen in das Schutzrohr.

Es ist bevorzugt, dass das Gehäuse wenigstens eine elektrische Verbindung und vorzugsweise zwei oder drei elektrische Verbindungen zur Kontaktierung des Heizdrahtes mit einem Kaltleiter oder zur Kontaktierung zweier Heizdrahtabschnitte umschließt. Der wenigstens eine Kaltleiter führt vorzugsweise zu einer dem Stecker zugeordneten externen elektrischen Steckverbindung. Die elektrische Verbindung umfasst zweckmäßigerweise einen elektrischen Kontakt, beispielsweise eine Quetschhülse oder Lötverbindung, sowie bevorzugt einen Schrumpfschlauch. Unter dem Begriff "elektrische Verbindung" wird insbesondere nicht ein durchgängiger Heizdraht verstanden. Gemäß einer ersten Ausführungsform umschließt das Gehäuse lediglich eine elektrische Verbindung. In diesem Falle weist das Innenrohr bevorzugt lediglich einen Heizdraht auf, wobei dann der Heizdraht innerhalb des Gehäuses und innerhalb der elektrischen Verbindung mit einem Kaltleiter verbunden ist, welcher Kaltleiter aus dem Gehäuse herausgeführt ist. Gemäß einer zweiten Ausführungsform weist das Rohr zwei Heizdrähte auf, wobei die Heizdrähte innerhalb des Gehäuses in einer der beiden elektrischen Verbindungen mit jeweils einem Kaltleiter verbunden sind. Gemäß einer dritten Ausführungsform umschließt das Gehäuse drei elektrische Verbindungen. Gemäß dieser Ausführungsform umfasst das Rohr zwei Heizdrähte und der Stecker weist einen eigenen, separaten Heizdraht auf. In der ersten elektrischen Verbindung sind der erste Heizdraht des Rohres und das erste Ende des Heizdrahtes des Steckers miteinander verbunden. In der zweiten elektrischen Verbindung dieser Ausführungsform sind das zweite Ende des Heizdrahtes des ersten Steckers sowie ein erster Kaltleiter miteinander verbunden. In der dritten elektrischen Verbindung sind der zweite Heizdraht des Rohres sowie der zweite Kaltleiter miteinander verbunden. Gemäß einer vierten Ausführungsform weist der Stecker einen eigenen separaten Heizdraht auf und das Rohr umfasst zwei Heizdrähte. Der erste Heizdraht des Rohres ist mit dem ersten Ende des Heizdrahtes des Steckers über eine erste elektrische Verbindung verbunden, wohingegen der zweite Heizdraht des Rohres mit dem zweiten Ende des Heizdrahtes des Steckers über eine zweite elektrische Verbindung miteinander verbunden sind. Gemäß dieser Ausführungsform weist der Stecker keinen Kaltleiter auf. In der Folge umschließt das Gehäuse zwei elektrische Verbindungen. Gemäß einer fünften Ausführungsform umschließt das Gehäuse keine elektrische Verbindung, weil lediglich ein einziger durchgängiger Heizdraht vorliegt. Der durchgängige Heizdraht ist bevorzugt doppelhelixförmig auf dem Innenrohr angeordnet und endet zweckmäßigerweise in einer Schleife innerhalb des Gehäuses.

Die Erfindung lehrt außerdem ein Verfahren zum Betrieb einer Rohrleitung für ein fluides Medium von Kraftfahrzeugen, insbesondere einer erfindungsgemäßen Rohrleitung, wobei die Rohrleitung ein Rohr, wenigstens ein Heizdraht und einen an einem Rohrende des Rohrs angeordneten Stecker umfasst, wobei der Stecker einen Steckerschaft und ein das Rohrende und den Heizdraht umschließendes Gehäuse aufweist, wobei der Steckerschaft ein Rastmittel, vorzugsweise einen Ringbund, zum Verrasten in einem Verbinder umfasst,
wobei das Rohr ein Innenrohr und ein Anlageelement aufweist, wobei der Heizdraht zwischen dem Innenrohr und dem Anlageelement angeordnet ist, wobei das Anlageelement den Heizdraht auf dem Innenrohr zur Anlage bringt, wobei das Gehäuse das Anlageelement teilweise umschließt,
wobei im Betrieb der Rohrleitung wenigstens eine Teillänge des Rohres und der Stecker mittels des ersten Abschnittes des Heizdrahtes mit einer ersten Heizleistung beaufschlagt werden und dass ein zweiter Abschnitt des Heizdrahtes zwischen dem Anlageelement und dem Gehäuse verläuft und den Stecker mit einer zweiten Heizleistung beaufschlägt.

Es ist besonders bevorzugt, dass die zweite Heizleistung des zweiten Abschnittes des Heizdrahtes wenigstens teilweise auf ein Wärmeleitelement, insbesondere ein erfindungsgemäßes Wärmeleitelement, übergeht. Besonders bevorzugt erwärmt das Wärmeleitelement den Steckerschaft von innen und erwärmt insbesondere einen Dichtungsabschnitt des Steckerschaftes von innen.

Nachfolgend wird die Erfindung anhand einer lediglich ein Ausführungsbeispiel darstellenden Zeichnung detailliert erläutert. Es zeigen in schematischer Darstellung
- **Figur 1**: eine erfindungsgemäße Rohrleitung in perspektivischer Darstellung mit geöffnetem Gehäuse,
- **Figur 2**: die Rohrleitung aus Figur 1 im Längsschnitt ohne Gehäuse, Halter, elektrische Verbindungen und den zwischen Anlageelement und Gehäuse befindlichen Heizdraht,
- **Figur 3**: einen Querschnitt von Gehäuse, Halter und Rohrende aus Figur 1 und
- **Figur 4**: eine Querschnittsansicht des Heizdrahtes aus den Figuren 1 bis 3.

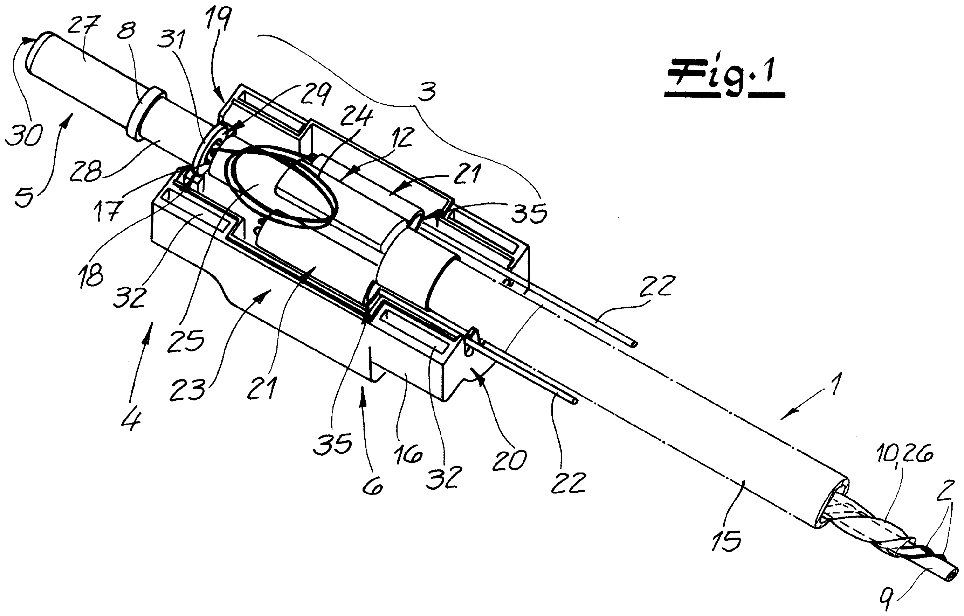

In Fig. 1 ist ein Rohr 1 dargestellt, welches an seinem linken Rohrende 3 mit einem Stecker 4 verbunden ist. Das Rohr 1 umfasst ein Innenrohr 9 und zwei an dem Innenrohr 9 anliegende und doppelhelixförmig um das Innenrohr 9 gewundene Heizdrähte 2. Um die Heizdrähte 2 und das Innenrohr 9 ist ein Anlageelement 10 umfassend ein Klebeband 26 gewickelt. Ein Schutzrohr 15 umschließt die Anordnung aus dem Innenrohr 9, den Heizdrähte 2 und dem Anlageelement 10, 26. Zwecks Wärmeisolierung ist das Schutzrohr 15 von dem Klebeband 26 beabstandet, so dass ein isolierender Luftmantel sich zwischen dem Schutzrohr 15 und dem Klebeband 26 befindet.

Der Stecker 4 umfasst einen Steckerschaft 5 und ein Gehäuse 6, wobei das Gehäuse 6 das Rohrende 3 umschließt. Der Steckerschaft 5 weist zum rastenden Verbinden mit einem in Fig. 1 nicht dargestellten Verbinder 7 ein Rastmittel 8 in Form eines Ringbundes auf. Ein Stirnende 29 des Steckerschaftes ist dem Rohrende 3 zugeordnet, wohingegen ein Stirnende 30 des Steckerschaftes von dem Rohrende abgewandt ist. An dem dem Rohrende 3 zugeordneten Stirnende 29 des Steckerschaftes 5 ist ein Eingriffselement 31 in Form eines Flansches angeordnet. Der Steckerschaft 5 weist einen Dichtungsabschnitt 27 zwischen dem dem Rohrende 3 abgewandten Stirnende 30 und dem Rastmittel 8 auf. Zwischen dem Rastmittel 8 und dem dem Rohrende 3 zugeordneten Stirnende 29 befindet sich ein Rastabschnitt 28 des Steckerschaftes 5. Das dem Rohrende 3 abgewandte Stirnende 30 des Steckerschaftes 5 ist zwecks erleichtertem Einstecken in den Verbinder 7 verjüngt.

Das Eingriffselement 31 des Steckerschaftes 5 steht in Eingriff mit einem komplementären Eingriffselement 18 in Form einer Nut des Gehäuses 6, wodurch eine zugfeste Verbindung zwischen Gehäuse 6 und Steckerschaft 5 hergestellt wird. Das Eingriffselement 18 ist in der Nähe einer dem Verbinder 7 zugewandten Stirnwand 19 des Gehäuses 6 angeordnet. Das Gehäuse 6 weist zwei Gehäuseteile 16 auf, wobei der Übersichtlichkeit halber in Fig. 1 lediglich das untere Gehäuseteil 16 abgebildet ist. Die Gehäuseteile 16 werden mittels Rastmitteln 32 miteinander verbunden.

Demgegenüber wird das Innenrohr 9 mit dem Steckerschaft 5 durch Einstecken in eine Aufnahme 17 des Steckerschaftes 5 und anschließendes Laserstrahlschweißen bzw. Laserdurchstrahlschweißen miteinander verbunden. Der Steckerschaft 5 ist daher, wie auch das Innenrohr 9, aus Kunststoff und vorzugsweise aus Polyamid gefertigt. Der Steckerschaft 5 ist schwarz gefärbt, jedoch gleichzeitig für Nahinfrarot- bzw. Infrarotstrahlung durchlässig. Demgegenüber ist das Innenrohr 9 für die Nahinfrarot- bzw. Infrarotstrahlung undurchlässig, so dass an der Grenzfläche in der Aufnahme 17 eine zuverlässige Schweißnaht entsteht.

Das Innenrohr 9 überragt am Rohrende 3 das Schutzrohr 15, wobei das Schutzrohr 15 gegenüber dem Innenrohr 9 bzw. dem Klebeband 26 mit den Heizdrähten 2 mittels eines Schrumpfschlauches 25 des Anlageelementes 10 abgedichtet ist. Am Rohrende 3 umschließt der Schrumpfschlauch 25 des Anlageelementes 10 das Klebeband 26 des Anlageelementes 10, wobei auch am Rohrende 3 sowohl das Klebeband 26 des Anlageelementes 10 als auch der Schrumpfschlauch 25 des Anlageelementes 10 die Heizdrähte 2 auf dem Innenrohr 9 zur Anlage bringen.

Die Heizdrähte 2 verlassen das Innenrohr 9 zwischen dem Stirnende 29 des Steckerschaftes 5 und dem Anlageelement 10, wobei der Einfachheit halber in Fig. 1 lediglich der obere Heizdraht 2 abgebildet ist. Der obere Heizdraht 2 ist zu mehreren Wicklungen eines schleifenförmigen Abschnittes 24 zusammengelegt und läuft schließlich in eine elektrische Verbindung 21 hinein. Dort wird der obere Heizdraht 2 mit einem Kaltleiter 22 elektrisch verbunden. Der Verlauf des unteren Heizdrahtes 2 ist analog zu dem oberen Heizdraht 2, jedoch in Fig. 1 nicht ersichtlich.

Die elektrischen Verbindungen 21 sind in einem Halter 12 befestigt, wobei der Halter 12 wiederum auf dem Schrumpfschlauch 25 am Rohrende 3 befestigt ist. Auf Einzelheiten dieser Befestigung wird nachfolgend noch eingegangen. Die Aus den Gehäuse 6 heraustretenden Kaltleiter 22 durchlaufen ein dem Steckerschaft 5 abgewandtes Stirnende 20 des Gehäuses 6. Das Stirnende 20 des Gehäuses 6 weist hierzu zwei Ausnehmungen auf. Der Halter 12 und die elektrischen Verbindungen 21 sind bevorzugt in einem Mittelabschnitt 23 des Gehäuses 6 angeordnet. Das Gehäuse 6 bzw. der Mittelabschnitt 23 ist so ausgebildet, dass der Halter 12 bzw. die elektrischen Verbindungen 21 das Gehäuse nicht berühren.

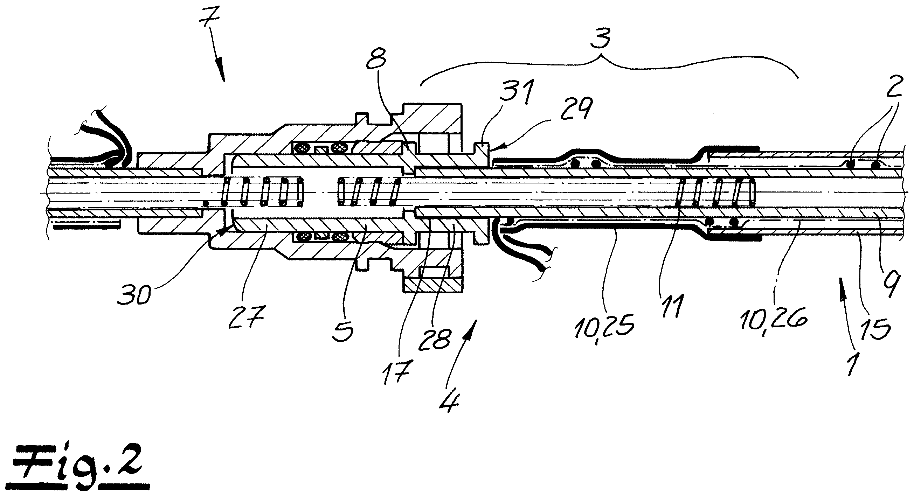

In Fig. 2 ist der Aufbau aus Fig. 1 im Längsschnitt abgebildet, wobei aus Gründen der Übersichtlichkeit auf die Darstellung des Gehäuses 6, des Halters 12 sowie der Heizdrähte 2, der elektrischen Verbindung 21 und der Kaltleiter 22 verzichtet wurde. In dieser Figur ist die Aufnahme 17 des Steckerschaftes 5 zu erkennen, in welche das Innenrohr 9 eingesteckt ist und am Ende der Aufnahme 17 anschlägt. Darüber hinaus ist in Fig. 2 die Wechselwirkung des Steckerschaftes mit dem Verbinder 7 dargestellt. So weist der Verbinder 7 im Inneren eine Dichtungsanordnung umfassend zwei Dichtungsringe auf, welche mit dem Dichtungsabschnitt 27 des Steckerschaftes 5 eine Abdichtung gewährleisten. Außerdem ist auf der unteren, rechten Seite des Verbinders ein Teilabschnitt eines Rastelementes angedeutet, welches zwei nicht dargestellte U-Schenkel aufweist. Diese U-Schenkel hintergreifen das Rastmittel 8 des Steckerschaftes 5 im Bereich des Rastabschnittes 28 des Steckerschaftes 5, so dass eine Rastverbindung ermöglicht ist.

Schließlich geht aus Fig. 2 hervor, dass ein Wärmeleitelement 11 in Form einer Schraubenfeder in das Innenrohr 9 am Rohrende 3 eingesteckt ist. Dieses Wärmeleitelement 11 erstreckt sich bis in den Dichtungsabschnitt 27 des Steckerschaftes 5 hinein. Dabei erzeugen die Heizdrähte 2 insbesondere über die schleifenförmigen Abschnitte 24 innerhalb des Gehäuses 6 eine Heizleistungsdichte, welche über die Heizleistungsdichte im Mittelabschnitt des Rohres 1 hinausgeht. Dieser Heizleistungsüberschuss erwärmt zugleich auch das Wärmeleitelement 11, welches die Wärme ohne jegliche elektrische Verbindung in den Steckerschaft 5 hineinträgt. Auf diese Weise wird ein Gefrieren insbesondere innerhalb des Dichtungsabschnittes 27 des Steckerschaftes 5 vermieden.

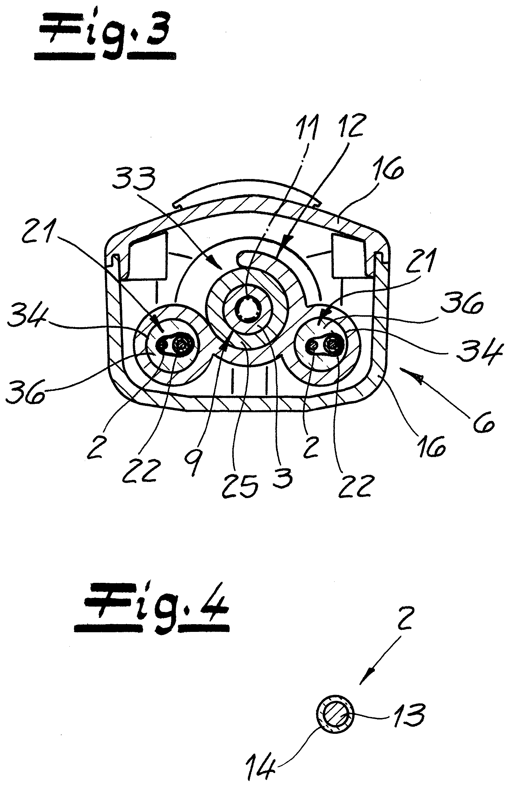

In Fig. 3 ist der Halter 12 am Rohrende 3 etwas vergrößert dargestellt. Der Halter 12 umfasst eine Nut 33, in welche das hier nur angedeutete Rohrende 3 eingerastet wird. Da das Rohrende 3 mit dem Schrumpfschlauch 25 ummantelt ist, ist die Nut 33 zweckmäßigerweise so ausgebildet, dass sie das Rohrende 3 nicht nur rastend, sondern auch dauerhaft klemmend und damit kraftschlüssig aufnimmt. Darüber hinaus umfasst der Halter 12 in diesem Ausführungsbeispiel zwei Aufnahmen 34 für je eine elektrische Verbindung 21. Die Aufnahmen 34 des Halters 12 sind in diesem Ausführungsbeispiel hohlzylindrisch ausgebildet und parallel zur Rohrachse ausgerichtet. Die Aufnahmen 34 des Halters 12 weisen Öffnungen auf, welche, dem Steckerschaft 5 zugewandt sind.. Die Aufnahmen 34 der Halterung 12 weisen außerdem an ihren dem Steckerschaft 5 abgewandten Ende je einen Anschlag 35 auf, durch welchen Anschlag 35 eine definierte Position der elektrischen Verbindungen 21 gewährleistet wird. Der Halter 12 ist wie auch der Steckerschaft 5 aus Kunststoff und mittels Spritzguss gebildet.

Die elektrischen Verbindungen 21 umfassen jeweils einen Schrumpfschlauch 36, welcher Schrumpfschlauch 36 eine Quetschhülse nebst Teillängen des Heizdrahtes 2 bzw. des Kaltleiters 22 umschließt. Die Quetschhülse erzeugt eine elektrische Kontaktierung von dem Heizdraht 2 und dem Kaltleiter 22. Durch den Schrumpfschlauch 36 sind die elektrischen Verbindungen 21 ebenfalls mit einer verhältnismäßig weichen Oberfläche versehen. Durch ein kraftschlüssiges Einschieben der elektrischen Verbindungen 21 in die Öffnungen der Aufnahmen 34 des Halters 12 werden, die elektrischen Verbindungen 21 vorteilhafterweise dauerhaft klemmend von den Aufnahmen 34 aufgenommen.

In der Fig. 4 schließlich ist ein Querschnitt des Heizdrahtes 2 zu erkennen. Der Heizdraht 2 umfasst eine Litze 13 aus Metall, vorzugsweise aus Kupfer. Die Litze 13 wird von einer Kunststoffbeschichtung 14 umschlossen, welche in diesem Ausführungsbeispiel Polyvinylidenfluorid (PVDF) umfasst und eine Dicke von 0,2 mm aufweist. Die Litze 13 hat in diesem Ausführungsbeispiel einen Durchmesser von 0,6 mm.

## Patentansprüche

1. Rohrleitung für ein fluides Medium von Kraftfahrzeugen, insbesondere für eine wässrige Harnstofflösung, umfassend ein Rohr (1), wenigstens einen Heizdraht (2) und einen an einem Rohrende (3) des Rohres (1) angeordneten Stecker (4), wobei der Stecker (4) einen Steckerschaft (5) und ein das Rohrende (3) und den Heizdraht (2) umschließendes Gehäuse (6) aufweist, wobei der Steckerschaft (5) einen Ringbund zum Verrasten in einem Verbinder (7) umfasst,
wobei das Rohr (1) ein Innenrohr (9) und ein Anlageelement (10) aufweist, wobei der Heizdraht (2) zwischen dem Innenrohr (9) und dem Anlageelement (10) angeordnet ist, wobei das Anlageelement (10) den Heizdraht (2) auf dem Innenrohr (9) zur Anlage bringt, wobei das Gehäuse das Anlageelement (10) teilweise umschließt, wobei ein erster Abschnitt des Heizdrahtes (2) am Rohrende (3) zwischen dem Anlageelement (10) und dem Innenrohr (9) verläuft,
**dadurch gekennzeichnet, dass**
ein zweiter Abschnitt des Heizdrahtes (2) zwischen dem Anlageelement (10) und dem Gehäuse (6) verläuft.

2. Rohrleitung nach Anspruch 1, wobei der zweite Abschnitt des Heizdrahtes (2) eine Länge aufweist, welche wenigstens um den Faktor 1,5, vorzugsweise um den Faktor 2 und besonders vorzugsweise wenigstens um den Faktor 3 größer ist als die Ausdehnung des zweiten Abschnittes des Heizdrahtes (2) in axialer Richtung.

3. Rohrleitung nach Anspruch 1 oder 2, wobei der Steckerschaft (5) und vorzugsweise der Stecker (4) frei von in oder an dem Steckerschaft (5) bzw. Stecker (4) angeordneten Ausrichtungselementen zur Ausrichtung des Heizdrahtes (2) ist.

4. Rohrleitung nach einem der Ansprüche 1 bis 3, wobei ein Wärmeleitelement (11) im Inneren des Rohrendes (3) angeordnet ist, welches Wärmeleitelement (11) sich bis in den Steckerschaft (5) und vorzugsweise bis in einen bzw. den Dichtungsabschnitt (27) des Steckerschaftes (5) hinein erstreckt.

5. Rohrleitung nach einem der Ansprüche 1 bis 4, wobei der Heizdraht (2) und der Steckerschaft (5) sich nicht in axialer Richtung überlappen.

6. Rohrleitung nach einem der Ansprüche 1 bis 5, wobei das Gehäuse (6) höchstens 70 %, vorzugsweise höchstens 50 % und besonders vorzugsweise höchstens 30 % der axialen Ausdehnung des Steckerschaftes (5) umschließt.

7. Rohrleitung nach einem der Ansprüche 1 bis 6, wobei das Gehäuse (6) einen Halter (12) zur Halterung des wenigstens einen Heizdrahtes (2) bzw. wenigstens einer elektrischen Verbindung (21) am Rohrende (3) umschließt.

8. Rohrleitung nach einem der Ansprüche 1 bis 7, wobei der Heizdraht (2) eine Litze (13) mit einer Kunststoffbeschichtung (14) aufweist, wobei die Kunststoffbeschichtung (14) vorzugsweise einen Fluorkunststoff umfasst.

9. Rohrleitung nach einem der Ansprüche 1 bis 8, wobei das Rohr (1) ein Schutzrohr (15) umfasst, wobei vorzugsweise das Schutzrohr (15) gegenüber dem Innenrohr (9) am Rohrende (3) abgedichtet ist.

10. Rohrleitung nach einem der Ansprüche 1 bis 9, wobei das Gehäuse (6) zwischen sich und dem Rohrende (3) einen mit Luft gefüllten Raum einschließt.

11. Rohrleitung nach einem der Ansprüche 7 bis 10, wobei das Gehäuse (6) und der Halter (12) so ausgebildet sind, dass sie einander nicht berühren.

12. Rohrleitung nach einem der Ansprüche 1 bis 11, wobei ein Abschnitt des Rohrendes (3) bzw. des Innenrohrs (9) in den Steckerschaft (5) bzw. in einer Aufnahme (17) des Steckerschaftes (5) hineingesteckt ist.

13. Rohrleitung nach einem der Ansprüche 1 bis 13, wobei das Gehäuse (6) wenigstens eine elektrische Verbindung (21) und vorzugsweise zwei oder drei elektrische Verbindungen (21) zur Kontaktierung des Heizdrahtes (2) mit einem Kaltleiter (22) oder zur Kontaktierung zweier Heizdrahtabschnitte umschließt.

14. Rohrleitung nach einem der Ansprüche 7 bis 13, wobei der Halter (12) wenigstens eine und vorzugsweise zwei oder drei Aufnahmen (34) zur Aufnahme hier einer elektrischen Verbindung (21) aufweist, wobei die Aufnahme (34) bzw. Aufnahmen (34) bevorzugt hohlzylindrisch ausgebildet ist/sind.

15. Verfahren zum Betrieb einer Rohrleitung für ein fluides Medium von Kraftfahrzeugen, insbesondere einer Rohrleitung gemäß einem der Ansprüche 1 bis 14, wobei die Rohrleitung ein Rohr (1), wenigstens einen Heizdraht (2) und einen an einem Rohrende (3) des Rohrs (1) angeordneten Stecker (4) umfasst, wobei der Stecker (4) einen Steckerschaft (5) und ein das Rohrende (3) und den Heizdraht (2) umschließendes Gehäuse (6) aufweist, wobei der Steckerschaft (5) einen Ringbund zum Verrasten in einem Verbinder (7) umfasst,
wobei das Rohr (1) ein Innenrohr (9) und ein Anlageelement (10) aufweist, wobei der Heizdraht (2) zwischen dem Innenrohr (9) und dem Anlageelement (10) angeordnet ist, wobei das Anlageelement (10) den Heizdraht (2) auf dem Innenrohr (9) zur Anlage bringt, wobei das Gehäuse (6) das Anlageelement (10) teilweise umschließt, wobei im Betrieb der Rohrleitung wenigstens eine Teillänge des Rohres (1) und der Stecker (4) mittels des ersten Abschnittes des Heizdrahtes (2) mit einer ersten Heizleistung beaufschlagt werden,
**dadurch gekennzeichnet, dass**
ein zweiter Abschnitt des Heizdrahtes (2) zwischen dem Anlageelement (10) und dem Gehäuse (6) verläuft und den Stecker (4) mit einer zweiten Heizleistung beaufschlägt.

## Claims

1. A fluid line for a fluid medium in motor vehicles, in particular for an aqueous urea solution, comprising a pipe (1), at least one heating wire (2) and a plug (4) arranged on one pipe end (3) of the pipe (1), wherein the plug (4) has a plug shaft (5) and a housing (6) that encases the pipe end (3) and heating wire (2), wherein the plug shaft (5) comprises a ring collar for latching in a connector (7),
wherein the pipe (1) has an inner pipe (9) and a support element (10), wherein the heating wire (2) is arranged between the inner pipe (9) and the support element (10), wherein the support element (10) brings the heating wire (2) to lie against the inner pipe (9), wherein the housing partially encases the support element (10), wherein a first section of the heating wire (2) at the pipe end (3) runs between the support element (10) and the inner pipe (9),
**characterized in that**
a second section of the heating wire (2) runs between the support element (10) and the housing (6).

2. The fluid line according to claim 1, wherein the second section of the heating wire (2) has a length that is larger than the expansion of the second section of the heating wire (2) in an axial direction by at least a factor of 1.5, preferably by a factor of 2, and especially preferably by at least a factor of 3.

3. The fluid line according to claim 1 or 2, wherein the plug shaft (5) and preferably the plug (4) are free of alignment elements arranged in or on the plug shaft (5) or plug (4) for aligning the heating wire (2).

4. The fluid line according to one of claims 1 to 3, wherein a heat conducting element (11) is arranged inside of the pipe end (3), wherein the heat conducting element (11) extends until into the plug shaft (5), and preferably until into a or the sealing section (27) of the plug shaft (5).

5. The fluid line according to one of claims 1 to 4, wherein the heating wire (2) and the plug shaft (5) do not overlap in an axial direction.

6. The fluid line according to one of claims 1 to 5, wherein the housing (6) encases at most 70%, preferably at most 50%, and especially preferably at most 30% of the axial expansion of the plug shaft (5).

7. The fluid line according to one of claims 1 to 6, wherein the housing (6) encases a retainer (12) for retaining the at least one heating wire (2) or at least one electrical terminal (21) at the pipe end (3).

8. The fluid line according to one of claims 1 to 7, wherein the heating wire (2) has a strand (13) with a plastic coating (14), wherein the plastic coating (14) preferably comprises a fluoroplastic.

9. The fluid line according to one of claims 1 to 8, wherein the pipe (1) comprises a protective pipe (15), wherein the protective pipe (15) is preferably sealed off relative to the inner pipe (9) at the pipe end (3).

10. The fluid line according to one of claims 1 to 9, wherein the housing (6) encloses a space filled with air between itself and the pipe end (3).

11. The fluid line according to one of claims 7 to 10, wherein the housing (6) and the retainer (12) are designed in such a way as not to contact each other.

12. The fluid line according to one of claims 1 to 11, wherein a section of the pipe end (3) or the inner pipe (9) is inserted into the plug shaft (5) or into a receptacle (17) of the plug shaft (5).

13. The fluid line according to one of claims 1 to 13, wherein the housing (6) encases at least one electrical terminal (21) and preferably two or three electrical terminals (21) for contacting the heating wire (2) with a non-heating wire (22) or for contacting two heating wire sections.

14. The fluid line according to one of claims 7 to 13, wherein the retainer (12) has at least one and preferably two or three receptacles (34) for receiving here an electrical terminal (21), wherein the receptacle (34) or receptacles (34) is/are preferably hollow cylindrical in design.

15. A method for operating a fluid line for a fluid medium in motor vehicles, in particular a fluid line according to one of claims 1 to 14, wherein the fluid line comprises a pipe (1), at least one heating wire (2) and a plug (4) arranged on one pipe end (3) of the pipe (1), wherein the plug (4) has a plug shaft (5) and a housing (6) that encases the pipe end (3) and the heating wire (2), wherein the plug shaft (5) comprises a ring collar for latching in a connector (7),
wherein the pipe (1) has an inner pipe (9) and a support element (10), wherein the heating wire (2) is arranged between the inner pipe (9) and the support element (10), wherein the support element (10) brings the heating wire (2) to lie against the inner pipe (9), wherein the housing (6) partially encases the support element (10), wherein, during operation of the fluid line, at least a partial length of the pipe (1) and the plug (4) are exposed to a first heat output by means of the first section of the heating wire (2),
**characterized in that**
a second section of the heating wire (2) runs between the contact element (10) and the housing (6), and exposes the plug (4) to a second heat output.

## Revendications

1. Conduite pour un milieu fluide de véhicules automobiles, en particulier pour une solution d'urée aqueuse, comprenant un tube (1), au moins un fil chauffant (2) et un connecteur (4) disposé sur une extrémité de tube (3) du tube (1), sachant que le connecteur (4) comporte une tige de connecteur (5) et un boîtier (6) entourant l'extrémité de tube (3) et le fil chauffant (2), sachant que la tige de connecteur (5) comprend un collet annulaire pour engagement dans un raccord (7),
sachant que le tube (1) comporte un tube intérieur (9) et un élément d'appui (10), sachant que le fil chauffant (2) est disposé entre le tube intérieur (9) et l'élément d'appui (10), sachant que l'élément d'appui (10) met en application le fil chauffant (2) sur le tube intérieur (9), sachant que le boîtier entoure en partie l'élément d'appui (10), sachant qu'une première section du fil chauffant (2) passe sur l'extrémité de tube (3) entre l'élément d'appui (10) et le tube intérieur (9),
**caractérisée en ce qu'**
une deuxième section du fil chauffant (2) passe entre l'élément d'appui (10) et le boîtier (6).

2. Conduite selon la revendication 1, sachant que la deuxième section du fil chauffant (2) comporte une longueur, laquelle est au moins de facteur 1,5, de préférence de facteur 2 et en particulier de préférence d'au moins de facteur 3 plus grande que l'extension de la deuxième section du fil chauffant (2) en direction axiale.

3. Conduite selon la revendication 1 ou 2, sachant que la tige de connecteur (5) et de préférence le connecteur (4) est dépourvu d'éléments d'orientation disposés dans ou sur la tige de connecteur (5) ou le connecteur (4) pour orienter le fil chauffant (2).

4. Conduite selon l'une quelconque des revendications 1 à 3, sachant qu'un élément thermo-conducteur (11) est disposé à l'intérieur de l'extrémité de tube (3), lequel élément thermo-conducteur (11) s'étend jusque dans la tige de connecteur (5) et de préférence jusque dans une ou la section d'étanchéification (27) de la tige de connecteur (5).

5. Conduite selon l'une quelconque des revendications 1 à 4, sachant que le fil chauffant (2) et la tige de connecteur (5) ne se chevauchent pas en direction axiale.

6. Conduite selon l'une quelconque des revendications 1 à 5, sachant que le boîtier (6) entoure au maximum 70 %, de préférence au maximum 50 % et en particulier de préférence au maximum 30 % de l'extension axiale de la tige de connecteur (5).

7. Conduite selon l'une quelconque des revendications 1 à 6, sachant que le boîtier (6) entoure un support (12) pour la fixation d'au moins un fil chauffant (2) ou d'au moins une connexion électrique (21) à l'extrémité du tube (3).

8. Conduite selon l'une quelconque des revendications 1 à 7, sachant que le fil chauffant (2) comporte un toron (13) avec un revêtement de matière plastique (14), sachant que le revêtement de matière plastique (14) comprend de préférence une matière plastique fluorée.

9. Conduite selon l'une quelconque des revendications 1 à 8, sachant que le tube (1) comprend un tube de protection (15), sachant que le tube de protection (15) est de préférence étanchéifié par rapport au tube intérieur (9) à l'extrémité de tube (3).

10. Conduite selon l'une quelconque des revendications 1 à 9, sachant que le boîtier (6) englobe entre lui et l'extrémité de tube (3) un espace rempli d'air.

11. Conduite selon l'une quelconque des revendications 7 à 10, sachant que le boîtier (6) et le support (12) sont constitués de telle manière qu'ils ne se touchent pas.

12. Conduite selon l'une quelconque des revendications 1 à 11, sachant qu'une section de l'extrémité de tube (3) ou du tube intérieur (9) est insérée dans la tige de connecteur (5) ou dans un logement (17) de la tige de connecteur (5).

13. Conduite selon l'une quelconque des revendications 1 à 13, sachant que le boîtier (6) entoure un raccord (21) et de préférence deux ou trois connexions électriques (21) pour la mise en contact du fil chauffant (2) avec un fil de source de tension (22) ou pour la mise en contact des deux sections de fil chauffant.

14. Conduite selon l'une quelconque des revendications 7 à 13, sachant que le support (12) comporte au moins un et de préférence deux ou trois logements (34) pour loger ici une connexion électrique (21), sachant que le logement (34) ou les logements (34) est/sont de préférence constitué(s) cylindriquement creux.

15. Procédé de fonctionnement d'une conduite pour un milieu fluide de véhicules automobiles, en particulier d'une conduite selon l'une quelconque des revendications 1 à 14, sachant que la conduite comprend un tube (1), au moins un fil chauffant (2) et un connecteur (4) disposé à une extrémité de tube (3) du tube (1), sachant que le connecteur (4) comporte une tige de connecteur (5) et un boîtier (6) entourant l'extrémité de tube (3) et le fil chauffant (2), sachant que la tige de connecteur (5) comprend un collet annulaire pour engagement dans un raccord (7),
sachant que le tube (1) comporte un tube intérieur (9) et un élément d'appui (10), sachant que le fil chauffant (2) est disposé entre le tube intérieur (9) et l'élément d'appui (10), sachant que l'élément d'appui (10) met en application le fil chauffant (2) sur le tube intérieur (9), sachant que le boîtier (6) entoure en partie l'élément d'appui (10), sachant qu'en cours de fonctionnement de la conduite, au moins une longueur partielle du tube (1) et le connecteur (4) sont sollicités au moyen de la première section du fil chauffant (2) par une première puissance calorifique,
**caractérisée en ce qu'**
une deuxième section du fil chauffant (2) passe entre l'élément d'appui (10) et le boîtier (6) et le connecteur (4) est sollicité par une deuxième puissance calorifique.
